Europäisches Patentamt

European Patent Office

Office européen des brevets

(11) Publication number : **0 505 213 A1**

# (12) EUROPEAN PATENT APPLICATION

(21) Application number : **92302454.1**

(22) Date of filing : **20.03.92**

(51) Int. Cl.⁵ : **C01B 33/26, B01J 21/16**

(30) Priority : **21.03.91 GB 9105983**

(43) Date of publication of application :
**23.09.92 Bulletin 92/39**

(84) Designated Contracting States :
**DE FR IT**

(71) Applicant : **UNITED KINGDOM ATOMIC ENERGY AUTHORITY**
**11 Charles II Street**
**London SW1Y 4QP (GB)**

(72) Inventor : **Di Sanza, Julie**
**Flat 1, 11 Carnarvon Road**
**Reading, Berkshire RG1 5SB (GB)**
Inventor : **Segal, David Leslie**
**Rush Common House, Dorchester Crescent**
**Abingdon, Oxfordshire OX14 2AH (GB)**

(74) Representative : **Mansfield, Peter Turquand et al**
**United Kingdom Atomic Energy Authority**
**Patents Department Building 329 Harwell Laboratory**
**Oxfordshire, OX11 0RA (GB)**

(54) Interlayered clay-based materials.

(57) Interlayered clay-based materials such as pillared clay-based materials and delaminated pillared clay-based materials are prepared by treating a natural or synthetic layered clay with a Type 1 sol pillaring agent. The interlayered clay-based materials prepared in this way are suitable for use as catalysts, catalyst supports or adsorbents. Catalyst materials or catalyst precursors may be introduced by impregnation or by addition to the sol.

EP 0 505 213 A1

The present invention is concerned with interlayered clay-based materials and is particularly concerned with pillared clay-based materials and delaminated pillared clay-based materials.

According to the present invention there is provided an interlayered clay based material which comprises a synthetic or natural layered clay, an intercalated species derived from a Type 1 sol, and micropores.

The term micropores refers to pores of width less than 2nm. The material may also be delaminated, and so also define macropores of width greater than 50nm. Additionally or alternatively it may comprise a catalyst or catalyst precursor.

The present invention further provides a method of preparing an interlayered clay-based material which comprises dispersing a natural or synthetic layered clay in an aqueous medium, and contacting the clay dispersion with an aqueous Type 1 sol to form a mixture.

Desirably the interlayered clay-based material is then separated from the aqueous mixture, washed, dried and calcined. The invention also encompasses the material produced by the above process.

Sols are stable, aqueous, colloidal dispersions containing primary particles or aggregates of primary particles which are smaller than 150nm. Sols can be classified into three types depending on the nature of the basic or fundamental colloidal unit; namely Type 1, 2 and 3.

Type 1 sols consist of basic or fundamental units which are polynuclear ions which form an inorganic polymer. They may be formed by the hydrolysis and polymerisation of monomeric cations. The molecular weight of the polynuclear cations may depend on the degree of hydrolysis; it is usual for these sols to have an anion to metal ratio of approximately 1:1. The polymeric species of these sols are not large enough to scatter light efficiently, therefore the sol and the resultant gel are optically clear. The gel derived from a Type 1 sol has a high density, low porosity and an x-ray diffraction pattern which consists of very broad bands. Type 1 sols may be formed from the polynuclear ions listed in the following paper including those containing Al III, Fe III, Zr IV, Th IV; J.D.F. Ramsay "Neutron and Light Scattering Studies of Aqueous Solutions of Polynuclear Ions Water and Aqueous Solutions", 207-218, 1986 (Ed. G. W. Neilson and J.E. Enderby: Bristol. Adam Hilger).

Type 2 sols consist of basic or fundamental units which have a definite shape e.g. spherical, rod or plate-like, and whose units are amorphous or microcrystalline. The sol is formed by extensive hydrolysis of a salt and has a low anion to metal atom ratio of approximately 0.3:1. It is also possible to prepare these sols by peptization of fresh precipitates. The colloidal units are not aggregated and the sol and the resultant gel may both be clear. Type 2 sols may include Fe III, Al III, Zr IV, Ce IV and Ti IV.

In Type 3 sols the basic or fundamental colloidal units are aggregated. They are usually crystalline and the gels formed by water removal have a low density. These sols scatter light and are therefore opaque. Type 3 sols include sols formed from ultrafine powders prepared by vapour phase techniques e.g. flame hydrolysed powders.

Type 1 and 2 sols when dehydrated may yield gels which are greater than 45% of the theoretical density of the oxide. Type 3 sols when dehydrated may yield gels which have a density less than 45% of the theoretical density of the oxide.

The preferred Type 1 sols are those which may be derived from a Group IV metal or Group VI metal.

The most preferred Type 1 sol may be derived from a zirconium salt precursor such as zirconium carbonate and a concentrated mineral acid such as concentrated nitric acid; a suitable method of preparation is described in GB 1 181 794. Hydrochloric acid is also a suitable mineral acid for preparation of the zirconia sol. Type 1 sols which contain nitrate or bromide or chloride are discussed in a UKAEA Research Group Report, reference AERE-R5257 (1966) by J.L. Woodhead and J.M. Fletcher.

The layered clay to be used in the invention may be a synthetic or natural layered clay material. Suitable layered clays are described in "Chemistry of Clays and Clay Minerals" Ed. A.C.D. Newman. Suitable layered clays for use in the invention may include smectite clays, montmorillonite clays, saponite clays, bentonite, hectorite, laponite, beidellite, mica, chlorites and vermiculites.

Some layered natural and synthetic clays may be visualised as a sandwich comprising two outer layers of silicon/oxygen tetrahedra and an inner layer of alumina octahedra. These sandwich layers are stacked one upon the other to yield a clay particle. This lamellar structure generally has interplatelet spacings of the order 0.9nm. The magnitude of the inter-platelet spacings depends on the type of clay. In some clays there may be one tetrahedral layer and one octahedral layer. The inter-platelet spaces can contain alkali metal and/or alkaline earth metal cations. The inter-platelet spacings may be increased by exchanging the alkali metal and/or alkaline earth metal cations with species which produce discrete pillars of inorganic oxide; species which produce these pillars are referred to as pillaring agents. The inter-platelet spacings of smectite clays may be increased in this way. Using such pillaring agents can increase the inter platelet spacings to values as high as 3.0-4.0nm. Such modified clay materials are known as Pillared Clays or Pillared Interlayered Clays (PILC) and are characterised in that the clay platelets orientate themselves face-to-face thereby forming a lamellar structure held apart by metal oxide pillars, which yields an X-ray diffraction pattern containing a distinct first order or (001) reflection.

These pillared clays are further characterised in that they have high micropore volumes.

Under certain conditions some layered clay materials form flocculated reaction products in aqueous media. This may occur when treating layered clay materials (for example laponite) with a pillaring agent. These flocculated reaction products, when including a pillaring agent, may be referred to as delaminated pillared clays. These delaminated pillared clays, like the pillared clays, contain regions where the clay platelets orientate themselves face-to-face to produce a lamellar structure. In addition delaminated pillared clays contain regions where the clay platelets orientate themselves edge-to-edge and edge-to-face destroying the lamellar structure in these regions; these are referred to as regions of delamination. These delaminated pillared clays are characterised in that they have both microporous and macroporous regions and do not yield an X-ray diffraction pattern which contains distinct first order or (001) reflections. The interlayered clay based materials of the present invention include pillared clay and delaminated pillared clay materials.

The layered natural and synthetic clays can be used as supplied or can be treated so as to bring about ion exchange of the intercalated alkali metal and/or alkaline earth metal cations. Replacing calcium ions with sodium ions produces a clay which has improved swelling properties. For example Wyoming Bentonite DM can be treated with sodium chloride solution to produce $Na^+$-Wyoming Bentonite which has improved swelling properties.

The interlayered clay-based materials of the invention are generally prepared by a process which comprises mixing a Type 1 sol and the natural or synthetic layered clay material together in the weight ratio of oxide in the sol to clay of between 0.1-10, allowing the mixture to stand, separating the modified clay, followed by washing, drying and calcining the modified clay material. The order of mixing the sol and the aqueous clay suspension is not critical. The sol can be added to the aqueous clay suspension or the aqueous clay suspension can be added to the sol. The Type 1 sol may be used at any suitable concentration up to 430 $gl^{-1}$. The aqueous clay suspension may be of any concentration up to 30 $gl^{-1}$ preferably from 0.1-25 $gl^{-1}$ and most preferably from 10-20 $gl^{-1}$.

If desired the Type 1 sol can be aged prior to use. The Type 1 sol may be aged by heating the sol at up to reflux temperature for up to 24 hours. A thermal aging step may also be included in the preparation of the interlayered clay material. In this case the mixture of the sol and natural or synthetic layered clay may be heated at up to reflux temperature for up to 24 hours.

The mixture of sol and synthetic or natural layered clay can be allowed to stand for up to 40 hours and preferably at least 1 hour and typically 24 hours before separation. Separation of the interlayered clay can be achieved by any suitable method such as centrifugation, filtration, recantation or spray drying. In the latter the clay material is simultaneously separated and dried. The separated product can be washed, and is typically washed with deionised water several times before drying. The drying process can be achieved at ambient temperature and/or by oven drying. When oven drying is used it is preferred that the maximum temperature used is no more than 150°C and preferably between 80-100°C.

For some applications such as catalysis it is desirable that the dried interlayered material is calcined. Calcination results in the irreversible gellation of the intercalated sol derived species. Calcination improves the chemical and thermal resistance properties of the interlayered clay. Calcination of the interlayered clay material is carried out at a temperature of less than 1000°C and preferably less than 750°C and most preferably less than 500°C. The interlayered clay material is calcined for up to 24 hours and preferably from 1-12 hours. The calcination conditions can be varied to control the porosity and surface area of the interlayered clay material. After calcination the interlayered clay material may be further treated by a milling process such as ball milling.

The sorption of nitrogen by a solid may be used to determine both specific surface area and pore volume distributions. The type of adsorption isotherm is characteristic for the type of material; S.J. Gregg and K.S.W. Sing in "Adsorption, Surface Area and Porosity", 2nd Edition, Academic Press, 1982. Type I isotherms are obtained with microporous solids with a relatively small external surface area. Type II isotherms are most frequently encountered when adsorption occurs on non-porous powders or on powders with pore diameters larger than micropores e.g. macropores.

The interlayered clay material has a surface area of 16-500 $m^2g^{-1}$ preferably 50-500 $m^2g^{-1}$ and most preferably 75-250 $m^2g^{-1}$. The interlayered clay material has a micropore volume in the range 0.05-0.12 $cm^3g^{-1}$.

When the interlayered clay material is a pillared clay it exhibits a Type I isotherm for nitrogen sorption. When the interlayered clay material is a delaminated pillared clay it exhibits a Type II isotherm for nitrogen sorption. The occurrence of a Type II isotherm is indicative of the presence of macropores in the clay, but does not exclude the presence of micropores.

The interlayered clay materials of the invention can be used as catalysts, catalyst supports or adsorbants. When used as catalysts it may be advantageous or desirable to modify the interlayered clay materials further in order to enhance or provide additional catalytic activity. This can he achieved by impregnating the interlayered clay with solution or dispersion of a catalyst material or a precursor to a catalyst material. The impregnated interlayered clay may be treated to a further calcination step.

Alternatively and preferably the catalyst material or catalyst precursor can be added to the Type 1 sol prior to mixing with the natural or synthetic layered clay. In one example chloroplatinic acid can be added to a zirconia sol in the ratio of from 1:125 to 1:4 platinum to zirconia prior to mixing with the synthetic or natural layered clay material.

Alternatively the catalyst material or catalyst precursor may be added to the Type 1 sol and synthetic or natural layered clay mixture prior to refluxing of the mixture or after refluxing of the mixture and prior to separation and washing of the product.

The invention is further illustrated by example only with reference to the following Examples.

## Example 1

Aqueous zirconia sols were prepared by the method described in GB 1 181 794 using concentrated nitric acid or concentrated hydrochloric acid as the mineral acid. The anion to zirconia ratio was 0.9. Prior to use the sols were diluted to a concentration of 50 $gl^{-1}$. To obtain $Na^+$-Wyoming Bentonite, Wyoming Bentonite DM (Steetly Minerals) was dispersed in 1.0 M sodium chloride (BDH, Technical Grade) by mechanical stirring. The dispersion was centrifuged (3000 rpm, 15 min) in order to remove any large solid impurities which were located in the bottom fraction of the solids. After centrifugation the clay was redispersed in 1.0 M sodium chloride solution and the above separation procedure was repeated. This procedure was repeated a total of 5 times. The resulting sodium exchanged Wyoming Bentonite was dialysed to remove chloride ions. The dialysed $Na^+$-Wyoming Bentonite was dispersed in de-ionised water to give a dispersion of concentration of between 10-20 $gl^{-1}$.

The interlayered clay based materials (Samples 1-12) were prepared according to the following general recipe. An aqueous zirconia sol $[ZrO_2]$ = 50 $gl^{-1}$ was added slowly, with stirring to an aqueous dispersion of $Na^+$-Wyoming Bentonite of concentration 10-20 $gl^{-1}$; the volumes of clay suspension and Zirconia sol were adjusted to provide the desired zirconia/clay weight ratio. The resulting dispersion was stirred for 1 hour and then left to stand. After a contact time of 24 hours the solid phase was separated from the aqueous phase by centrifugation. The resulting interlayered clays were washed five times by dispersion in de-ionised water, separation by centrifugation and redispersion. The washed interlayered clays were dried under ambient conditions prior to oven drying at 100°C. The dried interlayered clays were then calcined for 1 hour at 400°C and ball milled. $N_2$ sorption data was measured in order to determine specific surface areas and micropore volumes. Table 1 lists the modified clays prepared by the method (Samples 1-12) and their properties. Samples 1-12 exhibited a Type II $N_2$ sorption isotherm. The $Na^+$- Wyoming Bentonite calcined at 400°C had a specific surface area of 16.2 $m^2g^{-1}$; the micropore volume was not determined.

EP 0 505 213 A1

Table 1

| Sample Number | Anion in Sol | Zirconia/Clay Weight ratio | Surface Area of Modified Clay $m^2 g^{-1}$ | Micropore Volume of Modified Clay $cm^3 g^{-1}$ |
|---|---|---|---|---|
| Sample 1 | $NO_3^-$ | 0.19 | 88 | 0.055 |
| Sample 2 | $NO_3^-$ | 0.23 | 112 | 0.071 |
| Sample 3 | $NO_3^-$ | 0.27 | 128 | 0.078 |
| Sample 4 | $NO_3^-$ | 0.41 | 93 | 0.084 |
| Sample 5 | $NO_3^-$ | 0.95 | 138 | 0.096 |
| Sample 6 | $NO_3^-$ | 1.2 | 168 | 0.104 |
| Sample 7 | $NO_3^-$ | 1.9 | 145 | 0.099 |
| Sample 8 | $NO_3^-$ | 3.0 | 164 | 0.098 |
| Sample 9 | $NO_3^-$ | 6.8 | 150 | 0.110 |
| Sample 10 | $Cl^-$ | 0.41 | 102 | 0.076 |
| Sample 11 | $Cl^-$ | 3.0 | 161 | 0.095 |
| Sample 12 | $Cl^-$ | 6.8 | 150 | 0.094 |

Example 2

An interlayered clay based material with a zirconia: clay ratio of 4.6 was prepared according to the general recipe outlined in Example 1. The zirconia sol used had an anion to zirconia ratio of 0.9 and was refluxed for 24 hours prior to use. The interlayered clay based material produced (Sample 13) had a micropore volume of 0.18 $cm^3 g^{-1}$ a surface area of 236 $m^2 g^{-1}$ and its $N_2$ sorption isotherm exhibited more Type I than Type II character.

Example 3

An interlayered clay based material with zirconia: clay ratio of 1.5 was prepared according to the general recipe outlined in Example 1. The zirconia sol used had an anion to zirconia ratio of 0.9. In the method the zirconia sol was added to the clay dispersion at reflux and the mixture was refluxed for 24 hours. The interlayered clay based material produced (Sample 14) had a micropore volume of 0.11 $cm^3 g^{-1}$ and a surface area of 148 $m^2 g^{-1}$ and its $N_2$ sorption isotherm was similar to those exhibited by samples 1-12.

Example 4

Four interlayered clay based materials were prepared according to the general method outlined in Example 1, and then each material was separately calcined at 400°C, 500°C, 600°C or 700°C. The sols used had an anion to zirconia ratio of 0.9. Table 2 lists the interlayered clay based material prepared (Samples 15-30) and their properties.

Table 2

| Sample Number | Calcination Temperature °C | Specific Surface Area ($m^2g^{-1}$) | Micropore Volume ($cm^3g^{-1}$) | Anion in sol | Zirconia/Clay Weight ratio |
|---|---|---|---|---|---|
| 15 | 400 | 128 | 0.078 | $NO_3^-$ | 0.27 |
| 16 | 500 | 103 | 0.067 | $NO_3^-$ | 0.27 |
| 17 | 600 | 87 | 0.063 | $NO_3^-$ | 0.27 |
| 18 | 700 | 51 | 0.043 | $NO_3^-$ | 0.27 |
| 19 | 400 | 93 | 0.084 | $NO_3^-$ | 0.41 |
| 20 | 500 | 98 | 0.079 | $NO_3^-$ | 0.41 |
| 21 | 600 | 77 | 0.061 | $NO_3^-$ | 0.41 |
| 22 | 700 | 25 | 0.054 | $NO_3^-$ | 0.41 |
| 23 | 400 | 150 | 0.107 | $NO_3^-$ | 6.8 |
| 24 | 500 | 126 | 0.090 | $NO_3^-$ | 6.8 |
| 25 | 600 | 109 | 0.083 | $NO_3^-$ | 6.8 |
| 26 | 700 | 61 | 0.051 | $NO_3^-$ | 6.8 |
| 27 | 400 | 102 | 0.076 | $Cl^-$ | 0.41 |
| 28 | 500 | 70 | 0.060 | $Cl^-$ | 0.41 |
| 29 | 600 | 79 | 0.064 | $Cl^-$ | 0.41 |
| 30 | 700 | 61 | 0.026 | $Cl^-$ | 0.41 |

## Example 5

Platinum doped interlayered clay based materials (Samples 31-34) were prepared by the general method outlined in Example 1. Prior to the mixing of the zirconia sol and the clay dispersion, chloroplatinic acid was added to the zirconia sol. The platinum to zirconium ratio in the sol was in the range 1:4 to 1:125. The sol had a nitrate to zirconia ratio of 0.9. The platinum doped interlayered clay based materials prepared are listed in Table 3 along with their properties.

Table 3

| Sample Number | Specific Surface Area ($m^2 g^{-1}$) | Micropore Volume ($cm^3 g^{-1}$) | Zr:Pt Ratio in Sol | Zr:Pt Ratio in Clay | PtO wt % in sample | ZrO wt % in sample |
|---|---|---|---|---|---|---|
| 31 | 86 | 0.052 | 8:1 | 4:1 | 7.43 | 15.1 |
| 32 | 114 | 0.073 | 16:1 | 6.5:1 | 5.31 | 18.4 |
| 33 | 102 | 0.074 | 4:1 | 4.5:1 | 9.65 | 22.8 |
| 34 | 114 | 0.080 | 50:1 | 62:1 | 0.75 | 25 |

## Example 6

A zirconia sol with nitrate to zirconia ratio of 0.9 was used to prepare an interlayered clay based material (Sample 35) with $ZrO_2$/clay = 4.6 using the general method outlined in Example 3. In addition, enough aqueous chloroplatinic acid was added, with stirring, to the cooled mixture to give a platinum content of 0.5% by wt in the calcined product. After addition of the chloroplatinic acid the mixture was allowed to stand for 24 hours. Centrifugation did not separate the two phases as a very fine dispersion was formed; the mixture was, therefore, dried without washing, calcined and ball milled. This sample 35 had a specific surface area of 138 $m^2 g^{-1}$ and micropore volume of 0.105 $cm^3 g^{-1}$.

## Example 7

A zirconia sol with chloride to zirconia ratio of 0.9 was used to prepare an interlayered clay base material (Sample 36) with $ZrO_2$/clay = 7.6 using the general method outlined in Example 3. In addition enough aqueous chloroplatinic acid was added, with stirring, to the cooled mixture to give 3.7% by weight of platinum in the calcined product. As with Example 6 the product was dried without washing, calcined, and ball milled. The sample 36 had a specific surface area of 128 $m^2 g^{-1}$ and a micropore volume 0.118 $cm^3 g^{-1}$.

## Example 8

A temperature-programmed micro-reactor was used to evaluate some of the interlayered clay materials prepared in Examples 1-7 as oxidation catalysts. The total oxidation of n-butane was used as a test reaction.

An interlayered clay sample (0.1g) was placed in a continuous stream of reactant gas (1% by volume of n-butane in synthetic air) at a flow rate of 100 $cm^3 min^{-1}$ (S.T.P.). A tube furnace was used to control the temperature of the catalyst bed over a range of temperature steps. At each temperature the concentration of eluted n-butane, the permanent gases ($N_2$, $O_2$), carbon monoxide and carbon dioxide were monitered.

The temperature ($T_1$) at which n-butane oxidation commenced, the temperature at 50% conversion ($T_{50}$) and percentage conversion at 400°C were determined. The results are listed in Table 4.

Table 4

| Sample | Platinum % Content | Catalytic Activity | | |
|--------|--------------------|----|----|----|
| | | $T_1$ °C | $T_{-0}$ °C | CONV % 400°C |
| 31 | 7.43 | 175 | 213 | 99.1 |
| 32 | 5.31 | 175 | 213 | 99.3 |
| 33 | 0.65 | 125 | 161 | 100.0 |
| 34 | 0.75 | 225 | 262 | 98.2 |
| 35 | 0.5 | 225 | 298 | 86.3 |
| 36 | 3.5 | 250 | 323 | 85.3 |

1   Pt content used during the preparation of these samples.

## Claims

1.   An interlayered clay-based material comprising a synthetic or natural layered clay, intercalated species and micropores characterised in that the intercalated species is derived from a Type 1 sol.

2.   An interlayered clay-based material as claimed in claim 1 wherein the material is delaminated and comprises macropores.

3.   An interlayered clay-based material as claimed in either claim 1 or claim 2 wherein the layered clay is selected from the smectite group of clays.

4.   An interlayered clay-based material as claimed in claim 3 wherein the layered clay is bentonite.

5.   An interlayed clay-based material as claimed in any one of the preceding claims wherein the sol from which the intercalated species is derived is a zirconia sol.

6.   A process for preparing an interlayered clay-based material, which comprises a synthetic or natural layered clay, intercalated species and micropores, comprising dispersing a natural or synthetic layered clay in an aqueous medium and contacting the clay dispersion with a precursor to the intercalated species to form a mixture, characterised in that the precursor is a Type 1 sol.

7.   A process as claimed in claim 6 also comprising the steps of separating the clay-based material from the mixture, washing the material, drying and calcining the material.

8.   A process according to claim 6 or claim 7 wherein a catalyst material or a catalyst precursor is added to the sol before it is contacted with the layered clay dispersion.

9

9.   A process according to claim 6 or claim 7 wherein a catalyst material or a catalyst precursor is added to the mixture.

10.  A process according to any one of claims 6 to 9 wherein the Type 1 sol is a zirconia sol.

EP 0 505 213 A1

## EUROPEAN SEARCH REPORT

**European Patent Office**

Application Number

EP 92 30 2454

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN vol. 13, no. 367 (C-626)(3715) 15 August 1989 & JP-A-1 123 631 ( MITSUBISHI HEAVY IND LTD ) 16 May 1989 * abstract * | 1,6 | C01B33/26 B01J21/16 |
| A | PATENT ABSTRACTS OF JAPAN vol. 13, no. 367 (C-626)(3715) 15 August 1989 & JP-A-1 123 630 ( MITSUBISHI HEAVY IND LTD ) 16 May 1989 * abstract * | 1,6 | |
| A | PATENT ABSTRACTS OF JAPAN vol. 14, no. 377 (C-748)(4320) 15 August 1990 & JP-A-2 137 716 ( MITSUBISHI MINING & CEMENT CO LTD ) 28 May 1990 * abstract * | 1,6 | |
| A | PATENT ABSTRACTS OF JAPAN vol. 12, no. 56 (C-477)(2903) 19 February 1988 & JP-A-62 202 813 ( CHICHIBU CEMENT CO LTD ) 7 September 1987 * abstract * | 1,6 | TECHNICAL FIELDS SEARCHED (Int. Cl.5) |
| A | EP-A-0 197 012 (RESEARCH INSTITUTE OF PETROLEUM PROCESSING) * claims 1-4,7,10 * | 1,6 | C01B B01J |
| A | US-A-4 742 033 (HARRIS ET AL) * claims 1,45 * | 1,6 | |

The present search report has been drawn up for all claims

| Place of search | Date of completion of the search | Examiner |
|---|---|---|
| BERLIN | 30 JUNE 1992 | CLEMENT J-P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)

11